(19) Europäisches Patentamt
European Patent Office
Office européen des brevets

(11) EP 4 346 053 A1

(12) EUROPÄISCHE PATENTANMELDUNG

(43) Veröffentlichungstag:
03.04.2024 Patentblatt 2024/14

(51) Internationale Patentklassifikation (IPC):
H02J 7/00 (2006.01)

(21) Anmeldenummer: 22198735.7

(22) Anmeldetag: 29.09.2022

(52) Gemeinsame Patentklassifikation (CPC):
H02J 7/00714; H01M 10/44; H02J 7/0047;
H02J 7/007182; G01R 31/36; H01M 10/48;
H02J 7/0048

(84) Benannte Vertragsstaaten:
AL AT BE BG CH CY CZ DE DK EE ES FI FR GB
GR HR HU IE IS IT LI LT LU LV MC MK MT NL NO
PL PT RO RS SE SI SK SM TR
Benannte Erstreckungsstaaten:
BA ME
Benannte Validierungsstaaten:
KH MA MD TN

(71) Anmelder: Siemens Aktiengesellschaft
80333 München (DE)

(72) Erfinder:
• Arzberger, Arno
96135 Stegaurach (DE)
• Polleti, Alexander
92507 Nabburg (DE)
• Scheer, Kilian
96231 Bad Staffelstein (DE)
• Witt, Jonas
90419 Nürnberg (DE)

(74) Vertreter: Siemens Patent Attorneys
Postfach 22 16 34
80506 München (DE)

(54) **VERFAHREN ZUM LADEN EINES ELEKTRISCHEN ENERGIE-SPEICHERS, ELEKTRISCHES ENERGIE-MANAGEMENT-SYSTEM UND COMPUTERPROGRAMM-PRODUKT ZUM DURCHFÜHREN DES VERFAHRENS SOWIE DEREN VERWENDUNG**

(57) Die Erfindung betrifft ein Verfahren zum Ändern eines elektrischen Lade-Zustands eines elektrischen Energie-Speichers durch mindestens einen Lade-Vorgang, bei dem dem elektrischen Energie-Speicher elektrische Energie zugeführt wird oder bei dem dem elektrischen Energie-Speicher elektrische Energie entnommen wird. Dabei werden folgende Verfahrens-Schritte durchgeführt:

a) Festlegen mindestens eines Ziel-Werts eines Ziel-Lade-Zustands des elektrischen Speichers,

b) Bestimmen mindesten eines Ist-Werts eines Ist-Lade-Zustands des elektrischen Speichers,

c) Extrapolieren des Ist-Werts des Ist-Lade-Zustands des Energie-Speicher auf einen Extrapolations-Wert eines Extrapolations-Lade-Zustands des Energie-Speichers unter Berücksichtigung mindestens eines Lade-Parameters des Lade-Vorgangs und

d) Vergleichen des Ziel-Werts des Ziel-Lade-Zustands mit dem Extrapolations-Wert des Extrapolations-Lade-Zustands und Starten oder Unterbrechen des Lade-Vorgangs bei einer Abweichung des Extrapolations-Werts vom Ziel-Wert von mehr als 2% (1004). Neben dem Verfahren werden ein Energie-Management-System sowie ein Computerprogramm-Produkt zum Durchführen des Verfahrens angegeben. Vorzugsweise wird als Energie-Speicher eine Lithium-Ionen-Batterie verwendet. Mit der Erfindung wird ein zeitnahes Unterbrechen des Lade-Vorgangs eines elektrischen Energie-Speichers sichergestellt. Das Verfahren wird in der High Precision Coulometry (HPC) eingesetzt.

FIG

# EP 4 346 053 A1

**Beschreibung**

Die Erfindung betrifft ein Verfahren zum Ändern eines elektrischen Lade-Zustands (Laden) eines elektrischen Energie-Speichers, ein elektrisches Energie-Management-System und ein Computerprogramm-Produkt zum Durchführen des Verfahrens. Darüber hinaus wird eine Verwendung des Verfahrens, des elektrischen Energie-Management-Systems oder des Computerprogramm-Produkts angegeben.

In der High Precision Coulometry (HPC) wird mittels Zyklisierung eines elektrischen Energie-Speichers in Form einer Batterie-Zelle eine Coulomb Effizienz bestimmt. Dabei wird die Batterie-Zelle wiederholt zwischen zwei vorher festgelegten Spannungs-Grenzen (Ziel-Ladezustände der Batterie-Zelle) geladen und entladen.

Für eine Qualität und Aussagekräftigkeit der Coulomb-Effizienz ist es wichtig, dass diese beiden Spannungs-Grenzen exakt eingehalten werden. Für das Treffen der exakten Grenzspannungen und des Zeitpunktes zwischen Laden der Batterie-Zelle und Entladen der Batterie-Zelle, wird die aktuelle Spannung (Ist-Wert des Ist-Lade-Zustands) der Batterie Zelle zu messen.

Der tatsächliche Ist-Wert der Zell-Spannung kann sich aber vom gemessenen Ist-Wert der Zell-Spannung unterscheiden. Eine Verfälschung der Messung kann aufgrund von Schwankungen eines Lade-Stroms vorliegen. Diese Schwankungen können sowohl stochastisch als auch periodisch begründet sein.

Somit ist ein Unterbrechen des Lade-Vorgangs (Umschaltung zum gewünschten Zeitpunkt), der wiederum von einer genau definierten Spannungsgrenze abhängig ist, nicht sichergestellt.

Aufgabe der Erfindung ist es, aufzuzeigen, wie das Unterbrechen (oder das Starten) des Lade-Vorgangs eines elektrischen Energie-Speichers möglichst exakt ausgelöst werden kann.

Zur Lösung der Aufgabe wird ein Verfahren zum Ändern eines elektrischen Lade-Zustands eines elektrischen Energie-Speichers durch mindestens einen Lade-Vorgang angegeben, bei dem dem elektrischen Energie-Speicher elektrische Energie zugeführt wird oder bei dem dem elektrischen Energie-Speicher elektrische Energie entnommen wird. Dabei werden folgende Verfahrens-Schritte durchgeführt:

a) Festlegen mindestens eines Ziel-Werts eines Ziel-Lade-Zustands des elektrischen Speichers,
b) Bestimmen mindestens eines Ist-Werts eines Ist-Lade-Zustands des elektrischen Speichers,
c) Extrapolieren des Ist-Werts des Ist-Lade-Zustands des Energie-Speicher auf einen Extrapolations-Wert eines Extrapolations-Lade-Zustands des Energie-Speichers unter Berücksichtigung mindestens eines Lade-Parameters des Lade-Vorgangs und
d) Vergleichen des Ziel-Werts des Ziel-Lade-Zustands mit dem Extrapolations-Wert des Extrapolations-Lade-Zustands und Starten oder Unterbrechen des Lade-Vorgangs bei einer Abweichung des Extrapolations-Werts vom Ziel-Wert von mehr als 2%.

Vorteilhaft ist es, wenn Ist-Werte von mehreren Ist-LadeZuständen bestimmt (gemessen) werden. Es wird also mindestens ein weiteres Bestimmen eines weiteren Ist-Werts mindestens eines weiteren Ist-Lade-Zustands durchgeführt. Der weitere Ist-Wert des Weiteren Ist-Lade-Zustands wird zusätzlich zum Ist-Wert des Lade-Zustands für das Extrapolieren verwendet.

Vorzugsweise wird die Abweichung aus dem Bereich von 5% bis 50% und insbesondere aus dem Bereich von 5% bis 20% gewählt. Bei einer Abweichung aus diesen Bereichen wird der Lade-Vorgang gestartet oder unterbrochen.

Zur Lösung der Aufgabe wird auch ein elektrisches Energie-Management-System zum Durchführen des Verfahrens angegeben mit einem Mittel zum Festlegen des Ziel-Werts des Ziel-Lade-Zustands des elektrischen Energie-Speichers, einem Mittel zum Bestimmen des Ist-Werts des Ist-Lade-Zustands des elektrischen Energie-Speichers, einem Mittel zum Extrapolieren des Ist-Werts des Ist-Lade-Zustands auf den Extrapolations-Wert des Extrapolations-Lade-Zustands, einem Mittel zum Vergleichen des Ist-Werts des Ist-Lade-Zustands mit dem Extrapolations-Wert des Extrapolations-Lade-Zustands und einem Mittel zum Starten oder Unterbrechen des Lade-Vorgangs bei einer Abweichung des Extrapolations-Werts des Extrapolations-Lade-Zustands vom Ziel-Wert des Ziel-Lade-Zustands von mehr als 2%.

Darüber hinaus wird zur Lösung der Aufgabe auch ein Computerprogramm-Produkt für das elektrische Energie-Management-system angegeben, wobei das Computerprogramm-Produkt zumindest ein Mittel der folgenden Gruppe aufweist: Mittel zum Festlegen des Ziel-Werts des Ziel-Lade-Zustands des elektrischen Energie-Speichers, Mittel zum Bestimmen des Ist-Werts des Ist-Lade-Zustands des elektrischen Energie-Speichers, Mittel zum Extrapolieren des Ist-Werts des Ist-Lade-Zustands auf den Extrapolations-Wert des Extrapolations-Lade-Zustands, Mittel zum Vergleichen des Ist-Werts des Ist-Lade-Zustands mit dem Extrapolations-Wert des Extrapolations-Lade-Zustands und Mittel zum Unterbrechen des Lade-Vorgangs. Mit Hilfe des Computerprogramm-Produkts kann das Verfahren (oder zumindest einer der Verfahrens-Schritte) computergestützt durchgeführt werden.

Das Laden umfasst ein Aufladen (Beladen) des Energie-Speichers oder ein Entladen des elektrischen Energie-Speichers. Zum Aufladen kann ein bestimmter Lade-Strom dem Energie-Speicher zugeführt werden. Zum Entladen des Energie-speichers kann ein bestimmter Lade-Strom abfließen.

Der Ziel-Wert ist ein zu Soll-Wert, bei dem der Lade-Vorgang gestartet oder unterbrochen wird. Der Soll-Wert ist beispielsweise eine eingangs erwähnte, für die Ermittlung der Coulomb-Effizienz einzuhaltende Spannungs-Grenze (Schluss-Wert der Zell-Spannung). Der Soll-Wert ist also einen Grenz-Lade-Zustand.

In einer besonderen Ausgestaltung wird das Bestimmen des Ist-Wert des Ist-Lade-Zustands während des Lade-Vorgangs durchgeführt. Damit ist es möglich, den Lade-Vorgang zu jeder Zeit zu kontrollieren und gegebenenfalls auch zu unterbrechen. Vorteilhaft ist es aber auch, den Ist-Wert des Ist-Lade-Zustand während einer Ruhe-Phase des Energie-Speichers zu bestimmen und dann gegebenenfalls das Laden des Energie-Speichers zu starten.

Vorzugsweise wird für das Extrapolieren eine Extrapolations-Zeit-Spanne verwendet, die zwischen einem Ist-Zeitpunkt, zu dem das Bestimmen des Ist-Werts des Ist-Lade-Zustands durchgeführt wird, und einem Extrapolations-Zeitpunkt liegt, für den der Extrapolations-Wert des Extrapolations-Lade-Zustands ermittelt wird, und die aus dem Bereich von 1 ms bis 1 s und insbesondere aus dem Bereich von 50 ms bis 500 ms ausgewählt wird.

Als elektrischer Energie-Speicher ist ein elektrischer Kondensator (z.B. Elektrolyt-Kondensator) denkbar. Insbesondere wird als elektrischer Energie-Speicher eine Batterie verwendet. Die Batterie (elektro-chemischer Energie-Speicher) weist mindestens eine Batterie-Zelle auf, über die beim Beladen elektrische Energie in chemische Energie und beim Entladen chemische Energie in elektrische Energie umgewandelt wird. Dazu wird beim Laden der Batterie bzw. der Batterie-Zelle eine bestimmte Elektrizitäts-Menge zugeführt und beim Entladen der Batterie bzw. der Batterie-Zelle eine bestimmte Elektrizitäts-Menge abgeführt (entnommen).

Vorzugsweise wird als Batterie eine wieder aufladbare Batterie (Akkumulator) verwendet. Der Lade-Vorgang ist hier zumindest annähernd reversibel. Dazu können verschiedenste Akkumulatoren verwendet werden, beispielsweise ein NatriumIonen-Akkumulator oder ein Nickel-Metallhydrid-Akkumulator.

In einer besonderen Ausgestaltung wird als wieder aufladbare Batterie eine Lithium-Ionen-Batterie (Lithium-Ionen-Akkumulator) verwendet. Lithium-Ionen-Batterien zeichnen sich durch eine relative hohe Energie-Dichte und durch einen relativ hohen Lade-Wirkungsgrad aus.

Für das Extrapolieren kann ein beliebiges, die Realität abbildendes Extrapolations-Modell verwendet werden. In einer besonderen Ausgestaltung wird für das Extrapolieren ein lineares Extrapolations-Modell mit linearer Regression des Ist-Werts auf den Extrapolations-Wert verwendet. Dazu wird vorzugsweise ein linearer Zusammenhang zwischen einem für den Lade-Vorgang genutzten statischen Lade-Strom und einer sich während des Lade-Vorgangs ändernden Speicher-Spannung des elektrischen Energie-Speichers genutzt. Ein solches Extrapolations-Modell ist relativ einfach. Dabei liefert ein solches Extrapolations-Modell sehr gute Ergebnisse. Eine Prognose zum zeitlichen Endpunkt des Ladens kann sicher getroffen werden.

In einer besonderen Ausgestaltung wird für das lineare Extrapolations-Modell ein linearer Zusammenhang zwischen einem für den Lade-Vorgang genutzten statischen Lade-Strom und einer sich während des Lade-Vorgangs ändernden Speicher-Spannung des elektrischen Energie-Speichers genutzt.

Zum Extrapolieren des Ist-Werts des Ist-Lade-Zustand auf den Extrapolations-Wert des Extrapolations-Lade-Zustands können verschiedenste Lade-Parameter herangezogen werden.

Insbesondere wird dazu zumindest eine aus der Gruppe Material des Energiespeichers, Struktur des Energie-Speichers, Lade-Kapazität des Energie-Speichers, Temperatur des Energie-Speichers und Feuchtigkeit einer Umgebung des Energie-Speichers ausgewählte Größe verwendet. Das Material betrifft beispielsweise Elektroden-Material oder Elektrolyt-Material der Batterie. Die Struktur betrifft beispielsweise die Beschaffenheit der Elektroden (Oberfläche oder Dicke einer Elektrode). Die Temperatur bezieht sich beispielsweis auf die augenblickliche Ist-Temperatur des Energie-Speichers.

Gemäß einem weiteren Aspekt der Erfindung werden das Verfahren, des elektrische Energie-Managements-System oder des Computerprogramm-Produkts nach Anspruch 12 in der High Precision Coulometry eingesetzt.

Anhand eines Ausführungsbeispiels und der dazu gehörenden, schematischen Figur wird die Erfindung näher beschrieben.

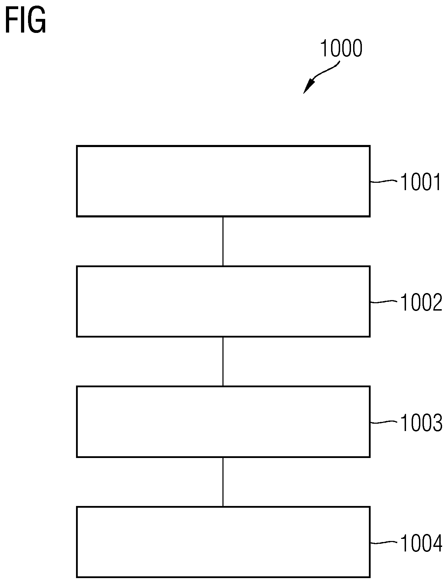

Die Figur zeigt ein Verfahren zum Ändern eine elektrischen Lade-Zustands eine elektrischen Energie-Speichers.

Gemäß den Ausführungsbeispiel wird eine Lithium-Ionen-Batterie (Lithium-Ionen-Akkumulator) als elektrischer Energie-Speicher verwendet. Zum Ändern 1000 des Lade-Zustands (Spannungs-Zustands) der Lithium-Ionen-Batterie, also zum Aufladen bzw. zum Entladen der Lithium-Ionen-Batterie, werden folgende Verfahrens-Schritte durchgeführt:

a) Festlegen 1001 eines Ziel-Werts eines Ziel-Lade-Zustands des elektrischen Speichers,

b) Bestimmen 1002 mindestens eines Ist-Werts eines Ist-Lade-Zustands des elektrischen Speichers,

c) Extrapolieren 1003 des Ist-Werts des Ist-Lade-Zustands des Energie-Speichers auf einen Extrapolations-Wert eines Extrapolations-Lade-Zustands des Energie-Speichers unter Berücksichtigung mindestens eines Lade-Parameters des Lade-Vorgangs und

d) Vergleichen des Ziel-Werts des Ziel-Lade-Zustands mit dem Extrapolations-Wert des Extrapolations-Lade-Zustands und Starten oder Unterbrechen des Lade-Vorgangs bei einer Abweichung des Extrapolations-Werts vom Ziel-Wert von ca. als 5% (1004).

Das Verfahren wird mit Hilfe eines elektrischen Energie-Management-System durchgeführt. Das elektrische Energie-Energie-Management-System ist computergestützt und wird unter Anwendung eines Computerprogramm-Produkts durchgeführt.

Das Computerprogramm-Produkt weist folgende Mittel auf:

- Mittel zum Festlegen des Ziel-Werts des Ziel-Lade-Zustands der Lithium-Ionen-Batterie,
- Mittel zum Bestimmen des Ist-Werts des Ist-Lade-Zustands der Lithium-Ionen-Batterie,
- Mittel zum Extrapolieren des Ist-Werts des Ist-Lade-Zustands auf den Extrapolations-Wert des Extrapolations-Lade-Zustands,
- Mittel zum Vergleichen des Ist-Werts des Ist-Lade-Zustands mit dem Extrapolations-Wert des Extrapolations-Lade-Zustands und
- Mittel zum Starten oder Unterbrechen des Lade-Vorgangs.

Für das Extrapolieren wird ein lineares Extrapolations-Modell mit linearer Regression des Ist-Werts des Ist-Lade-Zustands auf den Regressions-Wert des Regressions-Lade-Zustands verwendet. Für das lineare Extrapolations-Modell wird ein linearer Zusammenhang zwischen einem für den Lade-Vorgang genutzten statischen Lade-Strom und einer sich während des Lade-Vorgangs ändernden Speicher-Spannung der Lithium-Ionen-Batterie genutzt. Als Lade-Parameter werden u.a. die Temperatur der Lithium-Ionen-Batterie Energie-Speichers und die Luftfeuchtigkeit einer Umgebung der Lithium-Ionen-Batterie verwendet.

Für das Verfahren werden mehrere Ist-Werte mehrerer Ist-LadeZustände der Lithium-Ionen-Batterie gemessen (Messpunkte).

Die Zeitabschnitte zwischen den einzelnen Messpunkten sind gleich. Dadurch können diese normiert werden. Nachfolgend wird eine Regression über die letzten N Werte durchgeführt. Dabei ist y(x) das rohe Messignal zum Zeitpunkt x.

$$\bar{x} = \frac{1}{N}\sum_{x=0}^{N-1} x = \frac{N-1}{2}$$

$$\bar{y} = \frac{1}{N}\sum_{x=0}^{N-1} y(x)$$

$$\hat{b} = \frac{\sum_{x=0}^{N-1}(x-\bar{x})*(y(x)-\bar{y})}{\sum_{x=0}^{N-1}(x-\bar{x})^2} = \frac{\sum_{x=0}^{N-1}(x-\bar{x})*(y(x)-\bar{y})}{\frac{1}{12}(N^2-1)*N}$$

$$\hat{a} = \bar{y} - (\hat{b}*\bar{x})$$

Durch die Erstellung eines Modells mittels linearer Regression, wird der richtige Zeitpunkt gefunden, zu dem die Batterie-Zelle ihre Soll-Spannung erreicht. Als Einfluss-Größe dient beispielsweise der Mittelwert der letzten 1024 Messpunkte der Spannung und als Ziel-Größe (Ziel-Wert des Ziel-Lade-Zustands) wird die Soll-Spannung definiert. Es wird somit nicht spannungsgesteuert und somit von einer Messung abhängig umgeschaltet, sondern softwarebasiert. Die Lineare Regression nutzt dabei den linearen Zusammenhang zwischen statischen Strom und steigender Zellspannung aus.

Verwendung findet das Verfahren in der High Precision Coulometry.

**Patentansprüche**

1. Verfahren (1000) zum Ändern eines elektrischen Lade-Zustands eines elektrischen Energie-Speichers durch mindestens einen Lade-Vorgang, bei dem dem elektrischen Energie-Speicher elektrische Energie zugeführt wird oder bei dem dem elektrischen Energie-Speicher elektrische Energie entnommen wird, mit folgenden Verfahrens-Schritten:

a) Festlegen (1001) eines Ziel-Werts eines Ziel-Lade-Zustands des elektrischen Speichers,
b) Bestimmen (1002) mindestens eines Ist-Werts eines Ist-Lade-Zustands des elektrischen Speichers,
c) Extrapolieren (1003) des Ist-Werts des Ist-Lade-Zustands des Energie-Speichers auf einen Extrapolations-Wert eines Extrapolations-Lade-Zustands des Energie-Speichers unter Berücksichtigung mindestens eines Lade-Parameters des Lade-Vorgangs und
d) Vergleichen des Ziel-Werts des Ziel-Lade-Zustands mit dem Extrapolations-Wert des Extrapolations-Lade-Zustands und Starten oder Unterbrechen des Lade-Vorgangs bei einer Abweichung des Extrapolations-Werts vom Ziel-Wert von mehr als 2% (1004).

2. Verfahren nach Anspruch 1, wobei die Abweichung aus dem Bereich von 5% bis 50% und insbesondere aus dem Bereich von 5% bis 20% gewählt wird.

3. Verfahren nach Anspruch 1 oder 2, wobei das Bestimmen des Ist-Wert des Ist-Lade-Zustands während des Lade-Vorgangs durchgeführt wird.

4. Verfahren nach einem der Ansprüche 1 bis 3, wobei für das Extrapolieren eine Extrapolations-Zeit-Spanne verwendet wird, die

- zwischen einem Ist-Zeitpunkt, zu dem das Bestimmen des Ist-Werts des Ist-Lade-Zustands durchgeführt wird, und einem Extrapolations-Zeitpunkt liegt, für den der Extrapolations-Wert des Extrapolations-Lade-Zustands ermittelt wird, und
- die aus dem Bereich von 1 ms bis 1 s und insbesondere aus dem Bereich von 50 ms bis 500 ms ausgewählt wird.

5. Verfahren nach einem der Ansprüche 1 bis 4, wobei als elektrischer Energie-Speicher eine Batterie verwendet wird.

6. Verfahren nach Anspruch 5, wobei als Batterie eine wieder aufladbare Batterie verwendet wird.

7. Verfahren nach Anspruch 6, wobei als wieder aufladbare Batterie eine Lithium-Ionen-Batterie verwendet wird.

8. Verfahren nach einem der Ansprüche 1 bis 7, wobei für das Extrapolieren ein lineares Extrapolations-Modell mit linearer Regression des Ist-Werts des Ist-Lade-Zustand auf den Extrapolations-Wert des Extrapolations-Lade-Zustands verwendet wird.

9. Verfahren nach Anspruch 8, wobei für das lineare Extrapolations-Modell ein linearer Zusammenhang zwischen einem für den Lade-Vorgang genutzten statischen Lade-Strom und einer sich während des Lade-Vorgangs ändernden Speicher-Spannung des elektrischen Energie-Speichers genutzt wird.

10. Verfahren nach einem der Ansprüche 1 bis 9, wobei als Lade-Parameter zumindest eine aus der Gruppe Material des Energiespeichers, Struktur des Energie-Speichers, Lade-Kapazität des Energie-Speichers, Temperatur des Energie-Speichers und Feuchtigkeit einer Umgebung des Energie-Speichers ausgewählte Größe verwendet wird.

11. Elektrisches Energie-Management-System zum Durchführen eines Verfahrens nach einem der Ansprüche 1 bis 10 mit

- einem Mittel zum Festlegen des Ziel-Werts des Ziel-Lade-Zustands des elektrischen Energie-Speichers,
- einem Mittel zum Bestimmen des Ist-Werts des Ist-Lade-Zustands des elektrischen Energie-Speichers,
- einem Mittel zum Extrapolieren des Ist-Werts des Ist-Lade-Zustands auf den Extrapolations-Wert des Extrapolations-Lade-Zustands,
- einem Mittel zum Vergleichen des Ist-Werts des Ist-Lade-Zustands mit dem Extrapolations-Wert des Extrapolations-Lade-Zustands und
- einem Mittel zum Starten oder Unterbrechen des Lade-Vorgangs bei einer Abweichung des Extrapolations-Werts des Extrapolations-Lade-Zustands vom Ziel-Wert des Ziel-Lade-Zustands von mehr als 2%.

12. Computerprogramm-Produkt für ein elektrisches Energie-Management-System nach Anspruch 11, wobei das Computerprogramm-Produkt zumindest ein Mittel aufweist, das aus folgender Gruppe ausgewählt ist:

- Mittel zum Festlegen des Ziel-Werts des Ziel-Lade-Zustands des elektrischen Energie-Speichers,
- Mittel zum Bestimmen des Ist-Werts des Ist-Lade-Zustands des elektrischen Energie-Speichers,
- Mittel zum Extrapolieren des Ist-Werts des Ist-Lade-Zustands auf den Extrapolations-Wert des Extrapolations-Lade-Zustands,
- Mittel zum Vergleichen des Ist-Werts des Ist-Lade-Zustands mit dem Extrapolations-Wert des Extrapolations-Lade-Zustands und
- Mittel zum Starten Unterbrechen des Lade-Vorgangs.

13. Verwendung eines Verfahrens nach einem der Ansprüche 1 bis 10, des elektrischen Energie-Managements-System nach Anspruch 11 oder des Computerprogramm-Produkts nach Anspruch 12 in der High Precision Coulometry.

FIG

1000

1001

1002

1003

1004

Europäisches
Patentamt

European
Patent Office

Office européen
des brevets

# EUROPÄISCHER RECHERCHENBERICHT

Nummer der Anmeldung

EP 22 19 8735

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2015/097512 A1 (LI YONGHUA [US] ET AL) 9. April 2015 (2015-04-09) * Zusammenfassung; Abbildungen 5-8 * * Absätze [0019] - [0038] * ----- | 1,2,5-8, 10-13 | INV. H02J7/00 |
| A | EP 4 063 882 A1 (SIEMENS AG [DE]) 28. September 2022 (2022-09-28) * Zusammenfassung; Abbildungen * * Absätze [0009] - [0048] * ----- | 1 | |

**RECHERCHIERTE SACHGEBIETE (IPC)**

H02J

Der vorliegende Recherchenbericht wurde für alle Patentansprüche erstellt

| Recherchenort | Abschlußdatum der Recherche | Prüfer |
|---|---|---|
| München | 27. Februar 2023 | Hartmann, Martin |

KATEGORIE DER GENANNTEN DOKUMENTE

X : von besonderer Bedeutung allein betrachtet
Y : von besonderer Bedeutung in Verbindung mit einer
anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
nach dem Anmeldedatum veröffentlicht worden ist
D : in der Anmeldung angeführtes Dokument
L : aus anderen Gründen angeführtes Dokument
................................................................................
& : Mitglied der gleichen Patentfamilie, übereinstimmendes
Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

**EP 22 19 8735**

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

**27-02-2023**

| Im Recherchenbericht angeführtes Patentdokument | Datum der Veröffentlichung | Mitglied(er) der Patentfamilie | Datum der Veröffentlichung |
|---|---|---|---|
| US 2015097512 A1 | 09-04-2015 | CN 104512265 A<br>DE 102014219658 A1<br>US 2015097512 A1 | 15-04-2015<br>09-04-2015<br>09-04-2015 |
| EP 4063882 A1 | 28-09-2022 | EP 4063882 A1<br>WO 2022199933 A1 | 28-09-2022<br>29-09-2022 |

EPO FORM P0461

Für nähere Einzelheiten zu diesem Anhang : siehe Amtsblatt des Europäischen Patentamts, Nr.12/82